# EUROPÄISCHE PATENTSCHRIFT

(11) **EP 3 489 534 B1**
(45) Veröffentlichungstag und Bekanntmachung des Hinweises auf die Patenterteilung: **06.01.2021**
(21) Anmeldenummer: 18208113.3
(22) Anmeldetag: 23.11.2018
(51) Int. Cl.: F16C 19/36, F16C 33/66, F16C 35/078, F16C 35/063, F16C 35/067, F16C 25/06, F16B 33/00, F16B 33/02, F16B 39/30, F16C 19/54

(54) **LAGERVORSPANNVORRICHTUNG FÜR EINE GROSSLAGEREINHEIT SOWIE GROSSLAGEREINHEIT**
BEARING PRETENSIONING DEVICE FOR A LARGE-SIZE BEARING UNIT AS WELL AS LARGE-SIZE BEARING UNIT
DISPOSITIF DE PRÉCONTRAINTE DE PALIER POUR UNE UNITÉ DE PALIER GRAND AINSI QU'UNITÉ DE PALIER GRAND

(30) Priorität: 24.11.2017 DE 102017221101
(43) Veröffentlichungstag der Anmeldung: 29.05.2019
(73) Patentinhaber: Eolotec GmbH, 90429 Nürnberg (DE)
(72) Erfinder: REICHHART, Marc, 90763 Fürth (DE)
(74) Vertreter: FDST Patentanwälte

(56) Entgegenhaltungen:
- EP-A1- 1 856 409
- EP-A2- 1 674 746
- WO-A1-2017/147766
- DE-A1-102015 218 863

## Beschreibung

Die Erfindung betrifft eine Lagervorspannvorrichtung zum Vorspannen einer angestellten Großlagereinheit sowie eine solche angestellte Großlagereinheit, insbesondere ein Hauptlager einer Windkraftanlage.

Unter Großlagereinheiten werden vorliegend allgemein Wälzlager verstanden, die für hohe Traglasten beispielsweise von mehreren Tonnen ausgebildet sind und typischerweise einen Durchmesser größer 0,5 Meter, vorzugsweise größer 1m und vorzugsweise größer 1,5m und insbesondere größer zwei Meter aufweisen. Der Durchmesser ist dabei bezogen auf einen Innendurchmesser eines (kleinsten) Lagerrings der Großlagereinheit.

Das Hauptlager einer Windkraftanlage ist eine derartige Großlagereinheit. Mit dem Hauptlager wird ein Rotor der Windkraftanlage gelagert, welcher eine Rotornabe aufweist oder mit einer solchen verbunden ist. An dieser sind die einzelnen Rotorblätter angeordnet, über die die Windkraft aufgenommen und in eine Rotationsbewegung der Rotornabe übertragen wird. Der Rotor weist beispielsweise eine im Betrieb rotierenden Lagerwelle auf und ist über das Hauptlager gegenüber einem Lagergehäuse, beispielsweise ein separates Gehäuse oder auch ein Teilstück eines Maschinenträgers, gelagert. Alternativ ist der Rotor gegenüber einer im Betrieb feststehenden Lagerwelle über das Hauptlager gelagert.

Vorgespannte angestellte (Wälz-) Lagerungen gehören seit langer Zeit zum Stand der Technik. Sie können z.B. aus Kegelrollenlagern oder Schrägkugellagern aufgebaut werden. Angestellte Lager weisen mindestens zwei Lager auf, die typischerweise voneinander in Axialrichtung voneinander beabstandet sind. Es sind Großlagereinheiten in sogenannter X- oder O-Anordnung aus jeweils mindestens zwei Lagern bekannt. Die Vorspannung wird in den meisten Fällen über einen verschiebbaren Lagerring aufgebracht. Dieser wird bei der Montage in axialer Richtung solange verschoben, bis die gewünschte Vorspannung erreicht ist. Bei einer O-Anordnung wird die Vorspannung über Verschieben eines Innenrings, bei einer X-Anordnung hingegen über Verschieben eines Außenrings eingebracht.

Zum Fixieren des verschiebbaren Lagerrings in der gewünschten Position gibt es verschiedene konstruktive Elemente. Eine Möglichkeit besteht in der Verwendung eines mittels Schrauben angebrachten Deckels oder Klemmrings. Eine weitere Möglichkeit besteht z.B. in der Verwendung eines Sprengringes. Beiden Lösungen sind gemein, dass das Maß X angepasst werden muss (Zwischenlegbleche, Absatz oder Dicke schleifen).

Insbesondere bei kleinen bis mittelgroßen Lagerungen ist die Verwendung von Wellenmuttern bzw. Nutmuttern weit verbreitet. Gegenüber der Verwendung von verschraubten Deckeln oder Sprengringen haben diese den großen Vorteil, dass keine Anpassung aufgrund von Toleranzabweichungen notwendig ist und die Verschiebung des Lagerrings in Axialrichtung zur Einbringung der Vorspannung durch Anziehen der Wellenmutter erfolgen kann. Einige Ausführungen von Wellenmuttern weisen zusätzliche Sicherungselemente auf, damit sie sich nicht selbsttätig lösen können. Die Ausführungen sind genormt, z.B. DIN981 oder DIN1804. Die Wellenmuttern weisen durchgängig metrische Gewinde mit Flankenwinkeln von 30° oder Trapezgewinde mit Flankenwinkeln von 15° auf. Für kleinere Lagerungen hat sich dieses System bewährt.

Bei Großlagereinheiten sind die Lagersitze in der Regel als Presssitz mit einer großen Überpressung ausgeführt, um ein sogenanntes Ringwandern und damit Passungsrost und Verschleiß im Lagersitz zu verhindern. Dies führt dazu, dass eine relativ große axiale Kraft notwendig ist, um die Lagerringe zu verschieben. Hinzu kommt noch die gewünschte Vorspannkraft. Die Kräfte zur axialen Verschiebung des Lagerrings zur Erzeugung der gewünschten Vorspannkraft werden beispielsweise durch hydraulische Pressen aufgebracht.

Aus der EP 1 856 409 A1 ist ein Hauptlager einer Windkraftanlage zu entnehmen, bei dem auf eine Lagerwelle eine Wellenmutter aufgeschraubt ist.

In ähnlicher Weise ist auch bei einer Lageranordnung für ein medizinisches Gerät, wie sie aus der EP 1 674 746 A2 zu entnehmen ist, eine Wellenmutter auf eine Lagerwelle zur Fixierung eines Lagerrings aufgeschraubt.

Aus der WO 2017/147766A1 ist weiterhin eine Hilfsvorrichtung zum Aufbringen einer Lagervorspannung zu entnehmen.

Die DE 10 2015 218 863 A1 beschreibt weiterhin eine Lageranordnung mit einem Innenring, auf den eine Mutter als axialer Anschlag für Wälzkörper aufgeschraubt ist.

Bei allen Varianten zur Einstellung der Vorspannung bei einer Großlagereinheit mit Hilfe des axialen Verschiebens eines Lagerrings besteht insbesondere auch das Problem, dass der Lagerring verkippen kann.

Ausgehend hiervon liegt der Erfindung die Aufgabe zu Grunde, eine zuverlässige Einstellung einer Lagervorspannung bei einer Großlagereinheit zu ermöglichen, insbesondere ohne dass ein Lagerring bezüglich einer Lagerachse verkippt wird.

Die Aufgabe wird gemäß der Erfindung gelöst durch eine Lagervorspanneinrichtung mit den Merkmalen des Anspruchs 1 sowie durch eine Großlagereinheit gemäß Anspruch 15. Die im Hinblick auf die Lagervorspanneinrichtung angeführten Vorteile und bevorzugten Ausgestaltungen sind sinngemäß auch auf die Großlagereinheit zu übertragen.

Die Lagervorspannvorrichtung dient zum Vorspannen einer angestellten Großlagereinheit, welches also mindestens zwei (beabstandete) Lager aufweist. Die Großlagereinheit weist dabei allgemein eine Lagerwelle sowie ein Lagergehäuse auf, die über die zumindest zwei Lager aneinander gelagert sind. Im Betrieb rotiert eines der beiden Teile (Lagerwelle oder Lagergehäuse, meist die Welle) um eine Rotationsachse oder Lagerachse. Die beiden Lager sind typischerweise zueinander beispielsweise um zumindest einen halben Lagerdurchmesser voneinander in Axialrichtung, also in Richtung der Rotationsachse beabstandet. Die beiden Lager sind in O- Anordnung oder in X-Anordnung angestellt. Zur Erzeugung der Vorspannung wird vorzugsweise lediglich ein Lagerring axial verschoben. Alle (drei) weiteren Lagerringe der beiden Lager sind axial ortsfest gehalten (fester Lagersitz). Die zumindest zwei Lager der Großlagereinheit weisen vorzugsweise die gleichen oder ähnliche Durchmesser (+/- 20%) auf, d.h. der Innendurchmesser der Innenringe der Lager weisen typischerweise die gleichen oder ähnliche Durchmesser auf.

Zum Vorspannen der Großlagereinheit weist die Lagervorspannvorrichtung mindestens ein Innenteil mit Außengewinde und ein Außenteil mit Innengewinde auf. Je nach Ausführungsvariante wirkt das Außenteil oder das Innenteil mittelbar oder auch unmittelbar auf einen Lagerring eines der beiden Lager der Großlagereinheit ein, um den Lagerring in Axialrichtung zum Verspannen der Großlagereinheit zu verschieben. Das Außengewinde und das Innengewinde greifen ineinander. Die beiden Gewinde weisen jeweils eine lastübertragende Gewindeflanke sowie eine gegenüberliegende Gewindeflanke auf. Unter lastübertragende Gewindeflanke werden die Gewindeflanken verstanden, welche beim Verspannen eine in axialer Richtung wirkende Verspannkraft beim Verdrehen der beiden Teile (Außenteil, Innenteil) aufeinander übertragen. Eine jeweilige Gewindeflanke weist jeweils einen Flankenwinkel auf, wobei der Flankenwinkel der lastübertragenden Gewindeflanke maximal 10°, vorzugsweise maximal 5° und insbesondere 0° beträgt. Der Flankenwinkel der gegenüberliegende Gewindeflanke ist ≥0°, liegt bevorzugt im Bereich von 0°- 30°, speziell bei 0°, bei 15° oder bei 30°. Vorzugsweise liegt der Flankenwinkel der lastübertragenden Gewindeflanke bei 0° und der der gegenüberliegenden Flanke bei 0° oder bei 15° oder bei 30°.

Unter Flankenwinkel wird vorliegend jeweils der Winkel verstanden, unter dem die Gewindeflanke bezüglich einer Orthogonalebene orientiert ist, die senkrecht zu einer Drehachse orientiert ist, um die das Innenteil und das Außenteil relativ zueinander verdreht werden. Die Drehachse ist insbesondere die Rotationsachse der Großlagereinheit.

Diese Ausgestaltung beruht auf der Überlegung, dass bei der Aufbringung der Vorspannung bei Großlagereinheiten z.B. mit einer herkömmlichen Wellenmutter, die Flankenwinkel von 30° oder von 15° aufweisen, sämtliche Gewinde fertigungsbedingt Toleranzen aufweisen müssen. Aus diesem Grund muss zwischen einem Wellengewinde und der Wellenmutter ein Spiel vorgehalten werden, um ein Klemmen zu verhindern. Dies führt dazu, dass die Wellenmutter entsprechend dem Spiel radial (senkrecht zur Rotationsachse) zur Lagerwelle verschoben werden kann. Durch den Flankenwinkel ungleich 0 bei herkömmlichen Wellenmuttern führt dies zwangsläufig zu einer Verkippung der Wellenmutter. Bei kleinen Lagerungen stellt dies kein Problem dar, da die Breite der Lagerringe und deren Querschnitt bezogen auf den Durchmesser groß sind und deshalb der Lagerring in Bezug auf die Lagerwelle nicht verkippen kann. Deshalb richtet sich die Wellenmutter am Lagerring aus. Bei großen Lagerungen, wie bei der vorliegenden Großlagereinheit mit einem Lagerdurchmesser >1m und insbesondere >1,5m sind die Verhältnisse jedoch deutlich anders. Die Lagerringbreiten und Querschnitte sind in Bezug auf den Durchmesser klein.

Dies führt bei herkömmlichen Muttern dazu, dass die Lagerringe auf der Lagerwelle verkippen können, da durch die geringe Breite des Lagerrings bezogen auf seinen Durchmesser die Führung am Lagersitz der Lagerwelle im Vergleich zu kleinen Lagern deutlich reduziert ist. Außerdem sind die Ringe durch den im Verhältnis geringen Querschnitt in sich deutlich flexibler. Da auch die Gewindemutter durch den oben beschriebenen Effekt verkippen kann, würde es bei der Montage mit Hilfe von herkömmlichen Gewindemuttern zu nennenswerten Schrägstellungen und damit zu erheblichen Planlaufabweichungen für das vorgespannte Lager kommen. Dies kann die Funktion der Lagerung erheblich beeinträchtigen und zu einem verfrühten Lagerschaden führen. Um das Verkippen bei herkömmlichen Wellenmuttern einzuschränken, könnte das Gewindespiel deutlich eingeschränkt werden, was insbesondere bei den großen Dimensionen zu enormen Fertigungsschwierigkeiten und einer Kostenexplosion führen würde. Alternativ müsste während der Montage sichergestellt werden, dass der Lagerring bzw. die Mutter nicht Verkippen kann, was nur mit großem Aufwand realisierbar ist. Außerdem besteht dann im Betrieb die Gefahr, dass sich die Wellenmutter und der Lagerring nachträglich setzen und verkippen.

Das Problem des Verkippens bei der Verwendung von herkömmlichen Wellenmuttern wird erfindungsgemäß vorliegend dadurch gelöst, dass der Winkel der lastübertragenden Gewindeflanke (z.B. der Wellenmutter und der eines Wellengewindes, welches auf die Lagerwelle aufgebracht ist), die also beim Anziehen die Kraft überträgt, deutlich kleiner als bei herkömmlichen Muttern und insbesondere mit 0° ausgeführt wird. Dies führt dazu, dass eine Radialverschiebung des Innenteils relativ zum Außenteil, also beispielsweise der Wellenmutter relativ zur Lagerwelle keine Schiefstellung verursacht. Eine derart ausgeführtes Innenteil bzw. Außenteil (insb. Mutter) kann unter Last nicht verkippen. Mit dieser Ausführung können die Toleranzen und das Gewindespiel deutlich gröber definiert werden, ohne einen negativen Einfluss auf den Planlauf. Der Winkel der gegenüberliegenden Flanke, die beim Anziehen des Außenteils gegenüber dem Innenteil (oder umgekehrt) entlastet wird kann ebenfalls mit 0° oder aber mit einem beliebigen größeren Winkel, insbesondere mit einem Winkel von 0 bis 30° versehen sein. Die Flankenwinkel der lastübertragenden Gewindeflanken sind identisch. Gleiches gilt auch für die gegenüberliegenden Flanken.

Zur Aufbringung der Vorspannung wird bei einer O-Anordnung der innere Lagerring (Innenring) und bei einer X-Anordnung der äußere Lagerring eines der beiden Lager der angestellten Großlagereinheit axial verschoben.

Wird die Vorspannung über Verschiebung des äußeren Lagerrings (Außenring) eingebracht (X-Anordnung) ist vorzugsweise in das Lagergehäuse der Großlagereinheit ein Innengewinde mit den oben beschriebenen Flankenwinkeln eingebracht. Zum Erzeugen der Vorspannung wird in dieses Innengewinde ein Spannring mit Außengewinde eingedreht. Das Lagergehäuse bildet also in diesem Fall das Außenteil und der Spannring das Innenteil.

Wird die Vorspannung über eine Verschiebung des inneren Lagerrings (Innenring) eingebracht (O-Anordnung) weist vorzugsweise die Lagerwelle ein Wellengewinde mit den oben beschriebenen Flankenwinkeln auf. Auf die Lagerwelle wird eine Wellenmutter, allgemein ein Spannring mit Innengewinde aufgedreht, um den Innenring axial zu verschieben und die Vorspannung zu erzeugen. Der Spannring mit Innengewinde bildet also in diesem Fall das Außenteil und die Lagerwelle das Innenteil.

In bevorzugter Ausbildung weist der Innenring des Lagers eine Breite B sowie einen Durchmesser d auf, wobei das Verhältnis von B/d kleiner 0,3, vorzugsweise kleiner 0,1 und insbesondere auch kleiner 0,05 ist. Der Innenring und damit das Lager ist also im Vergleich zu seinem Durchmesser sehr dünn. Speziell bei solchen Lagern besteht die Gefahr eines Verkippens. Bei den Lagern der Großlagereinheit handelt es sich vorzugsweise um einreihige Lager. Alternativ können auch zwei- oder mehrreihige Lager vorgesehen sein.

Kegelrollenlager mit einem Durchmesser d von lediglich 100mm haben beispielsweise ein Verhältnis Breite Innenring zu Innendurchmesser (B/d) von 0,3 bis 0,7. Bei größeren Lagern liegt das Verhältnis typischerweise bei <0,3. Bei d=1000mm liegt B/d typischerweise bei ca. 0,1 und bei Lagern ab d=2000mm ist B/d teilweise kleiner 0,05.

Wie bereits erwähnt sind bei Großlagereinheiten die Lagersitze (Lagerringe) in der Regel als Presssitz mit einer großen Überpressung ausgeführt, um ein sogenanntes Ringwandern und damit Passungsrost und Verschleiß im Lagersitz zu verhindern. Dies führt dazu, dass eine relativ große axiale Kraft notwendig ist, um die Lagerringe zu verschieben. Hinzu kommt noch die zu erzielende Vorspannkraft. Daher ist eine hohe Gesamtkraft und damit zum Verdrehen des Innenteils bzw. des Außenteils ein hohes Drehmoment notwendig, da sowohl im Gewindegang als auch an der Fläche zwischen dem Innenteil/Außenteil und dem Lagerring (Außenring bzw. Innenring) Reibung auftritt. Um diese bei der Montage zu minimieren ist in zweckdienlicher Ausbildung ein reibungsminderndes Element angeordnet. Diese ist zwischen dem Innenteil und dem Außenteil und / oder zwischen dem Innenteil / Außenteil und dem axial zu verschiebenden Lagerring angeordnet.

Bei dem reibungsmindernden Element handelt es sich vorzugsweise um einen Schmierstoff, insbesondere z.B. Schmierfett oder Öl. Insbesondere ist der Schmierstoff über ein Schmierstoffversorgungsystem mit Druck eingebracht. Speziell handelt es sich bei dem Schmierstoffversorgungssystem um einen Öldruckverband. Hierbei wird allgemein der Schmierstoff unter Druck zwischen die lastübertragenden Gewindeflanken bzw. zwischen die Anlageflächen eingebracht mit denen Innenteil / Außenteil und Lagerring aneinander anliegen.

Vorzugsweise werden durch (Öl-) Bohrungen in einer Nut der lastübertragenden Gewindeflanke ein (Öl-)Druck erzeugt und die Reibung minimiert. Ergänzend oder Alternativ wird ein solcher Schmierstoff - Druckverband an den zuvor erwähnten Anlageflächen realisiert. Durch diese vorteilhaften Weiterbildungen wird das erforderliche Drehmoment an der Wellenmutter minimiert.

Alternativ oder Ergänzend zur Verwendung eines Schmierstoffes wird vorzugsweise eine reibungsmindernde Beschichtung als das reibungsmindernde Element verwendet. Als Beschichtung wird beispielsweise eine Teflon oder DLC (diamond like carbide) Beschichtung eingesetzt.

Eine weitere bevorzugte Möglichkeit (alternativ oder in Kombination mit einer oder beiden zuvor genannten Möglichkeiten) der Reibungsminimierung besteht in der Verwendung von Rollkörpern (z.B. Rollen oder Kugeln). Diese können im Gewinde und/oder zwischen Innenteil / Außenteil und dem zu verstellenden Lagerring angeordnet werden. Die Ausführung kann vollrollig/-kugelig, mit Distanzstücken oder mit Käfig erfolgen.

Die reibungsmindernde Beschichtung und / oder Rollkörper werden insbesondere verwendet, wenn die Lagervorspannvorrichtung als temporäre Hilfseinrichtung (Vorspanntool) zur Aufbringung der Vorspannkraft lediglich bei der Montage des eingesetzt und anschließend wieder entfernt wird. Der Schmierstoff, insbesondere der beschriebene Schmierstoff-Druckverband wird demgegenüber vorzugsweise dann verwendet, wenn die Lagervorspannvorrichtung dauerhafter Bestandteil der Großlagereinheit ist, also auch beim normalen Betrieb der Großlagereinheit Teil desselben ist.

Speziell in diesem Fall, wenn also die Lagervorspannvorrichtung dauerhafter Bestandteil der Großlagereinheit ist, werden - um ein Lösen des Innenteils / Außenteils im Betrieb zu verhindern - vorzugsweise nach dem Stand der Technik bekannte Vorrichtungen zur Verdrehsicherung verwendet bzw. integriert.

Allgemein gibt es also zwei Ausführungsvarianten, wobei bei der ersten Variante die Lagervorspannvorrichtung dauerhafter Bestandteil der Großlagereinheit ist und bei der zweiten Variante lediglich temporär während der Montage der Großlagereinheit eingesetzt ist.

Die Lagervorspannvorrichtung wird also in einer bevorzugten Variante als Hilfseinrichtung oder Montage-Hilfswerkzeug für die Montage von angestellten Großlagereinheiten verwendet, d.h. sie oder Bauteile von ihr werden nach der Montage wieder entfernt. D.h. mittels der Lagervorspannvorrichtung wird der Lagerring an die Position verschoben, die für die Erzeugung der gewünschten Lagervorspannung erforderlich ist. An dieser Position wird der Lagerring dann mit einem (weiteren) Vorspannelement fixiert und die Lagervorspannvorrichtung, zumindest das Innenteil / das Außenteil, welches auf den zu verspannenden Lagerring zu dessen axialer Verschiebung eingewirkt hat, wird wieder entfernt. Vorzugsweise wird auch das jeweilige Gegenstück also das Außenteil / Innenteil, welches nicht auf den Lagerring einwirkt, wieder entfernt.

Bei dem Vorspannelement handelt es sich insbesondere um einen Klemmring oder einen Sprengring. Hierbei liegt die Herausforderung in der Montage des Lagerrings, über dessen Verschiebung die Vorspannung in das System eingebracht wird.

Das Vorspannelement stütz sich typischerweise einerseits an einer (in axialer Richtung wirksamen) Gegenlagerfläche ab und ist gegen diese Gegenlagerfläche gespannt. Andererseits stützt sich das Vorspannelement an dem Lagerring ab. So wird beispielsweise der Klemmring gegen eine Gegenlagerfläche, z.B. eine Stirnfläche der Lagerwelle oder des Lagergehäuses mit Hilfe von Spannelementen, z.B. Spannschrauben verspannt. Der Sprengring stützt sich beispielsweise an einer Ringnut oder einem Ringsteg an der Lagerwelle oder am Lagergehäuse ab.

Diese Gegenlagerfläche ist also allgemein z.B. an der Lagerwelle bzw. am Lagergehäuse ausgebildet. Zwischen der Gegenlagerfläche und dem Lagerring (wenn dieser sich in der gewünschten, vorgespannten Position befindet) besteht ein definierter axialer Abstand, nachfolgend als Abstandsmaß bezeichnet. In bevorzugter Ausgestaltung ist die Lagervorspannvorrichtung zur Ermittlung dieses Abstandsmaßes, also zur Ermittlung eines axialen Abstands zwischen dem Lagerring und einem Referenzpunkt ausgeführt. Der Referenzpunkt ist insbesondere durch die Gegenlagerfläche gebildet oder durch einen sonstigen Referenzpunkt, welcher definiert zur Gegenlagerfläche angeordnet ist.

Um dieses Abstandsmaß X zu ermitteln, wird in der Regel zunächst der Lagerring montiert, was aufgrund des Presssitzes und der Vorspannkraft teilweise große Axialkräfte erfordert. Herkömmlich werden hierfür hydraulische Pressen für die Ringmontage und Vorspannungseinbringung eingesetzt. Diese sind allerdings teuer und in der Steuerung außerordentlich schwierig. Oftmals kommt es beim Verschieben des Lagerringes deshalb zu Verkippungen.

Mit der Verwendung der Lagervorspannvorrichtung als Montagehilfe wird dieses Problem gelöst, indem der Lagerring an die erforderliche Position insbesondere verkippungsfrei geführt wird und dann das Abstandsmaß erfasst wird. Hierfür ist eine geeignete Messvorrichtung (z.B. Messtaster) integriert. Die Bestimmung und Einstellung der gewünschten Lagervorspannung erfolgt beispielsweise mit Hilfe einer Vorrichtung und eines Verfahrens, wie sie in der EP 2 801 729 A2 beschrieben sind. Anhand des ermittelten Abstandsmaßes wird dann das Vorspannelement angepasst (z.B. die Dicke des Sprengrings in Axialrichtung) und anschließend eingesetzt.

Eine besonders vorteilhafte Methode das Abstandsmaß zu ermitteln, besteht in der Auswertung des Verdrehwinkels. Da die Dimensionen der Lagervorspannvorrichtung exakt gemessen werden bzw. exakt bekannt sind, kann aufgrund der bekannten Gewindesteigung über die Winkelposition von Außen- und Innenteil zueinander das Abstandsmaß aus der Verdrehung ermittelt oder errechnet werden. Vorzugsweise ist eine automatische Drehwinkelerfassung integriert und ein Auswertetool, das automatisch das Abstandsmaß ermittelt und ausgibt.

In bevorzugter Ausgestaltung ist zunächst das Innenteil / Außenteil, welches auf den Lagerring zu dessen axiale Verschiebung einwirkt, lediglich temporär eingesetzt und wird nach der Montage wieder entfernt. Das Gegenstück, also das Außenteil / Innenteil, welches nicht auf den Lagerring einwirkt, kann dauerhafter Bestandteil der Großlagereinheit sein.

In bevorzugter Ausgestaltung ist jedoch auch dieses Gegenstück lediglich temporär während der Montage eingesetzt und wird nach der Montage wieder entfernt. Hierzu ist insbesondere vorgesehen, dass dieses Gegenstück temporär mit der Großlagereinheit verbunden wird.

Handelt es sich bei dem Gegenstück um das Innenteil mit dem Außengewinde, so wird das Gegenstück vorzugsweise an der Lagerwelle befestigt. Das Außengewinde des Innenteils sitzt also nicht auf der Lagerwelle sondern auf einem separaten Ring/Welle, der/die temporär mit der Lagerwelle zum Zwecke der Ringmontage verbunden, beispielsweise verschraubt wird. Die Anordnung kann analog auf X-Anordnung übertragen werden. Hier ist ein Außenteil mit Innengewinde am Lagergehäuse temporär befestigt.

Zum Aufbringen des Anzugsmomentes, also zum axialen Verstellen des Lagerrings ist vorzugsweise ein Antrieb vorgesehen. Dieser ist vorzugsweise derart ausgebildet, dass er umfangsseitig am Innenteil oder am Außenteil angreift, d.h. an einer Umfangsseite das erforderliche Drehmoment einleitet.

Beispielsweise weist er ein oder mehrere oder mehreren Verstellelemente, insbesondere Hydraulikkolben auf, die tangential oder weitgehend tangential zwischen Innenteil und Außenteil, also z.B. zwischen Wellenmutter und den Gewindeinnenring angebracht sind.

Alternativ hierzu wird ein Zahnring am Innenteil oder Außenteil ausgebildet, der durch ein oder mehrere Ritzel im Betrieb angetrieben wird.

Eine solche Vorrichtung hat den entscheidenden Vorteil gegenüber hydraulischen Pressen, dass der Lagerring steht's planparallel verschoben wird und deshalb nicht verkippen kann. Außerdem kann die Zustellung sehr fein über die Verdrehung des Innenteils (Wellenmutter) / Außenteils (Spannring) gesteuert und erfasst werden.

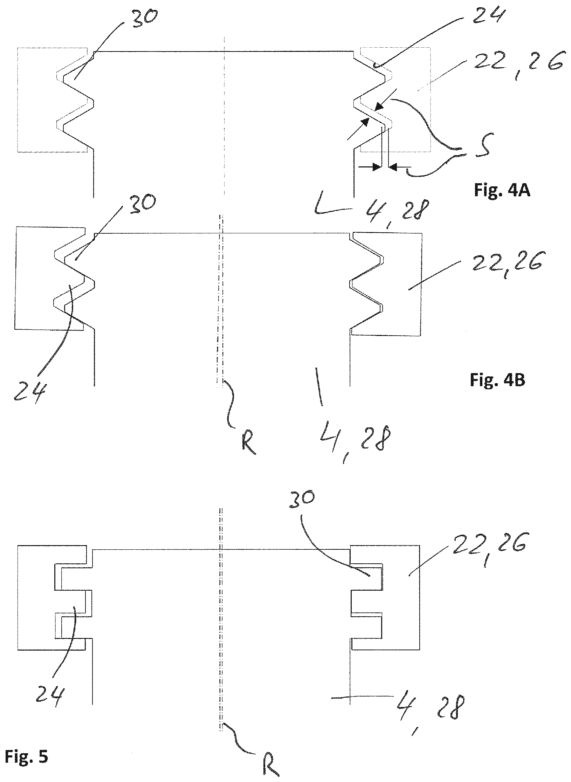

Bei den erfindungsgemäßen, beispielsweise in den Fig. 5 bis 8 dargestellten Lagervorspannvorrichtungen ist in bevorzugter Weiterbildung die Gewindestirnseite verrundet oder an den Ecken, also im Übergang zu den seitlichen Gewindeflanken, mit Fasen versehen. Unter Gewindestirnseite wird der Teilbereich des Gewindes verstanden, welcher die beiden Gewindeflanken, also die lastübertragende Gewindeflanke mit der gegenüberliegenden Gewindeflanke, verbindet. Durch die Ausgestaltung mit der Orientierung der Gewindeflanke unter 0° kann sich eine jeweilige Gewindestirnseite an einem Boden einer Gewindenut abstützen. Durch die Verrundung oder Fasen an der Gewindestirnseite wird eine definierte Abstützfläche geschaffen und ein Verkippen des Innenteils zum Außenteil vermieden.

In einer bevorzugten Weiterbildung sind das Innenteil und das Außenteil für eine radiale Zentrierung, also eine möglichst konzentrische Anordnung, zueinander ausgebildet. Sie weisen hierzu jeweils einander gegenüberliegende radiale Passflächen auf, zwischen denen ein vorgegebenes maximales Spaltmaß besteht. Bei der Passung handelt es sich beispielsweise um eine Passung gemäß ISO 286. Das Spaltmaß ist dabei derart gewählt, dass ein radialer Versatz der Mittenlinie des Innenteils zur Mittenlinie des Außenteils maximal 0,1 bis 0,5 mm beträgt. D.h. das Spaltmaß zwischen den gegenüberliegenden Passflächen bei exakt konzentrischer Anordnung beträgt maximal 0,1mm bis 0,5mm und vorzugsweise maximal 0,3 mm

Die Lagervorspannvorrichtung wird allgemein bei Großlagereinheiten eingesetzt. Ein bevorzugtes Anwendungsgebiet sind Großlagereinheiten von Windkraftanlagen, wie beispielsweise das Hauptlager oder auch Getriebelager etc.

Ausführungsbeispiele der Erfindung werden nachfolgend anhand der Figuren näher erläutert. Diese zeigen jeweils in schematischen Darstellungen:
- Fig. 1: eine ausschnittsweise Darstellung einer herkömmlichen, angestellten und vorgespannten Großlagereinheit mit einem Sprengring als Vorspannelement,
- Fig. 2: eine ausschnittsweise Darstellung einer herkömmlichen, angestellten und vorgespannten Großlagereinheit mit einem Klemmring als Vorspannelement,
- Fig. 3A,3B: herkömmliche Gewindegeometrien,
- Fig. 3C: eine erfindungsgemäße Gewindegeometrie,
- Fig. 4A,4B: eine herkömmliche Anordnung zwischen einer Lagerwelle und einer Wellenmutter bei konzentrischer Anordnung (Fig. 4A) sowie in einem verkippten Zustand (Fig. 4B),
- Fig. 5: eine erfindungsgemäße Anordnung zwischen einer Lagerwelle und einer Wellenmutter,
- Fig. 6: eine ausschnittsweise Darstellung der Anordnung gemäß Fig. 5, wobei ergänzend eine Schmiermittelversorgung vorgesehen ist,
- Fig. 7: eine ausschnittsweise Darstellung einer Lagervorspannvorrichtung, welche als Hilfseinrichtung bei der Montage der Großlagereinheit eingesetzt wird,
- Fig. 8: eine ausschnittsweise Darstellung ähnlich Fig.7, wobei ergänzend zwischen Gewindeflanken Rollkörper als reibungsmindernde Elemente eingesetzt sind, sowie
- Fig. 9: eine ausschnittsweise Darstellung ähnlich Fig. 7 mit einer Lagerwelle und einer Wellenmutter mit radialen Passflächen zur radialen Zentrierung.

In den Figuren sind gleich wirkende Teile mit den gleichen Bezugszeichen versehen.

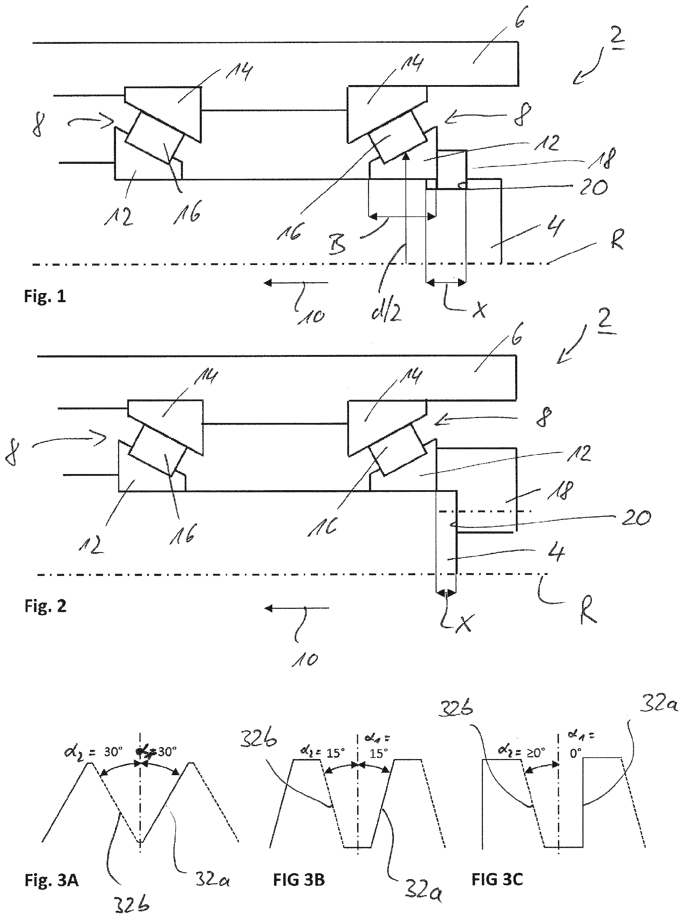

Eine Großlagereinheit 2 gemäß den Fig. 1 und 2 weist allgemein einen an einem Stator gelagerten Rotor auf. Im Ausführungsbeispiel ist ohne Beschränkung der Allgemeinheit eine Lagerwelle 4 sowie ein Lagergehäuse 6 dargestellt. Diese beiden Bauteile sind über zwei Lager 8 aneinander gelagert. Im Betrieb rotiert eines dieser beiden Bauteile 4,6 um eine Rotationsachse. D.h. sowohl die Lagerwelle 4 als auch das Lagergehäuse 6 können je nach Variante als Rotor oder als Stator ausgebildet sein. Üblicherweise rotiert im Betrieb die Lagerwelle 4 um die Rotationsachse R. Das andere Bauteil ist feststehend. Die gesamte Großlagereinheit 2 erstreckt sich entlang der Rotationsachse R in einer Axialrichtung 10.

Die beiden Lager 8 sind in Axialrichtung 10 voneinander beabstandet. Sie weisen jeweils einen Innenring 12, einen Außenring 14 sowie dazwischen angeordnete Wälzkörper 16 auf.

Bei der in den beiden Figuren 1,2 dargestellten Großlagereinheit handelt es sich um eine Lageranordnung in O-Anordnung. Bei dieser sind die Achsen der Wälzkörper 16 jeweils aufeinander zu gekippt, sodass sie in etwa ein V bilden. Daneben ist auch eine X-Anordnung bekannt, bei der die Achsen der Wälzkörper 16 gegenüber der gezeigten O-Anordnung in an sich bekannter Weise gegenläufig verkippt sind.

Die Innenringe 12 sowie die Außenringe 14 der beiden Lager 8 werden nachfolgend allgemein auch als Lagerringe bezeichnet. Von insgesamt vier Lagerringen sind vorzugsweise drei Lagerringe in Axialrichtung 10 durch entsprechende Anschläge an der Lagerwelle 4 bzw. am Lagergehäuse 6 ortsfest fixiert. Diese ortsfesten Lagerringen können auch integraler Bestandteil der Lagerwelle 4 bzw. des Lagergehäuses 6 sein, wie dies in der EP 2 947 339 A1 der Anmelderin beschrieben ist. Der verbleibende vierte Lagerring, im Ausführungsbeispiel mit der O-Anordung der auf der rechten Bildhälfte dargestellte Innenring 12, ist in Axialrichtung 10 zur Erzeugung einer Vorspannung verschiebbar.

Bei einer X-Anordnung würde der Innenring 12 gegen einen festen Anschlag anliegen und der Außenring 14 des rechten Lagers 8 wäre in Axialrichtung 10 verstellbar.

Bei der Montage der Großlagereinheit 2 ist hierbei die gewünschte Vorspannung durch ein axiales Verschieben dieses Lagerrings 12 einzustellen. Die axiale Position des Lagerrings 12 wird beispielsweise gemäß Fig. 1 durch ein als Sprengring ausgebildetes Vorspannelement 18 eingestellt und fixiert. Der Sprengring stützt sich an seiner Vorderseite an dem Innenring 12 und mit seiner Rückseite an einer Gegenlagerfläche 20 ab. Die Gegenlagerfläche 20 ist durch eine Seitenwandung einer Ringnut ausgebildet, die in die Lagerwelle 4 zur Aufnahme des Sprengrings ausgebildet ist.

Bei der Ausführungsvariante gemäß der Fig. 2 ist das Vorspannelement 18 als ein Klemmring ausgebildet, welcher ebenfalls mit einer Spannfläche gegen den Innenring 12, mit einer weiteren Fläche gegen eine Gegenlagerfläche 20 verspannt ist. Die Gegenlagerfläche 20 ist in diesem Beispiel eine Stirnfläche der Lagerwelle 4. Der Klemmring wird beispielsweise mithilfe von hier nicht näher dargestellten Spannelementen, insbesondere Spannschrauben verspannt, bis seine Spannfläche an der Gegenlagerfläche 20 zum Anliegen kommt.

Der Abstand zwischen der Gegenlagerfläche 20 und der Anlagefläche des Spannelements 18 am Lagerring 12 definiert ein axiales Abstandsmaß X.

Der Innenring weist weiterhin eine Breite B sowie einen (Innen-)Durchmesser d auf.

Die Verstellung des Lagerrings in Axialrichtung 10 zur Einstellung der Vorspannkraft wird nachfolgend der in den Fig. 1 und 2 dargestellten O-Anordnung erläutert, ohne Beschränkung der Allgemeinheit.

Zur axialen Verstellung des Lagerrings ist erfindungsgemäß allgemein eine Lagervorspannvorrichtung vorgesehen. Diese dient bei der in den Fig. 1 und 2 dargestellten O-Anordnung zur axialen Verstellung des Innenrings 12 und bei einer X-Anordnung zu einer axialen Verstellung des Außenrings 14.

Grundsätzlich besteht die Möglichkeit, die erforderliche axiale Verstellung des Lagerrings 12,14 mithilfe eines Spannrings 22 (vgl. hierzu beispielsweise die Fig. 4A,4B) durchzuführen. Dieser ist im Falle einer O-Anordnung eine Wellenmutter mit Innengewinde 24. Eine solche Wellenmutter ist dabei allgemein ein Außenteil 26 einer Gewindeverbindung der Lagervorspannvorrichtung. Das Außenteil 26 wird allgemein auf ein Innenteil 28 mit einem Außengewinde 30 aufgeschraubt.

Das Innenteil 28 ist bei der O-Anordnung insbesondere durch die Lagerwelle 4 gebildet.

Bei einer X-Anordnung wäre umgekehrt zur axialen Verstellung des Außenrings 14 ein Spannring mit Außengewinde vorgesehen, wobei der Spannring dann in einem entsprechenden Außenteil mit Innengewinde eingeschraubt werden würde. Das Außenteil wird dann beispielsweise durch das Lagergehäuse 6 gebildet.

Die Fig. 3A,3B zeigen herkömmliche Gewindegeometrien eines metrischen Gewindes (Fig. 3A) sowie eines Trapezgewindes (Fig. 3B), bei denen eine jeweilige Gewindeflanke 32A,B jeweils unter einem Flankenwinkel α1, α2 von 30° bzw. von 15° orientiert sind. Der Flankenwinkel α1, α2 ist hierbei als der Winkel definiert, den die jeweilige Gewindeflanke 32a, 32b - in einer Schnittansicht durch die Rotationsachse R - zu einer Orthogonalebene bzw. Vertikalachse senkrecht zur Rotationsachse R einnimmt, wie dies in den Fig. 3A bis 3C dargestellt ist.

In den Fig. 3A bis 3C ist dabei jeweils eine Gewindeflanke als gestrichelte Linie und eine als durchgezogene Linie dargestellt. Die durchgezogene Linie stellt dabei eine beim Anziehen belastete, Last übertragende Gewindeflanke 32a und die gestrichelte Linie ein beim Anziehen entlastete, gegenüberliegende Gewindeflanke 32b dar.

In der Fig. 3C ist eine erfindungsgemäße Gewindegeometrie dargestellt, bei der die Last übertragende Gewindeflanke 32a einen Flankenwinkel α1 von 0° orientiert ist. Die gegenüberliegende Gewindeflanke 32b ist gemäß der Fig. 3C mit einem Flankenwinkel α2 von 15° versehen. Allgemein kann der Flankenwinkel α2 beispielsweise 0°, 15° oder auch 30° betragen oder einen Wert dazwischen annehmen.

Mit der erfindungsgemäßen Gewindegeometrie gemäß Fig. 3C lässt sich ein Verkippen des Außenteils 26 bzw. des Innenteils 28 beim Aufbringen der erforderlichen Axialkraft auf den zu verspannenden Lagerring 12,14 vermeiden.

Das Problem des Verkippens bei herkömmlichen als Wellenmutter ausgebildeten Spannringen 22 wird anhand der Fig. 4 und 4B deutlich: Fig. 4A zeigt diese Situation bei einer konzentrischen Anordnung der Gewindemutter relativ zur Lagerwelle 4. Gut zu erkennen ist das erforderliche Gewindespiel S zwischen dem Innengewinde 24 und dem Außengewinde 30. Aufgrund dieses Gewindespiels S verkippen die Mitten- und Rotationsachsen der beiden Teile (Außenteil 26, Innenteil 28) relativ zueinander, wie dies in der Fig. 4B dargestellt ist.

Bei einer erfindungsgemäßen Gewindekonfiguration, bei der insbesondere die Last übertragende Gewindeflanke 32a mit einem Flankenwinkel α1 von 0° ausgebildet ist, ist ein derartiges Verkippen vermieden, wie dies in der Fig. 5 dargestellt ist.

Die Fig. 5 zeigt dabei eine erfindungsgemäße Ausgestaltung mit einem Innenteil 28 (Lagerwelle 4) und einem Außenteil 26 (Spannring 22, Gewindemutter), bei denen jeweils die Last übertragende Gewindeflanke 32a mit einem Flankenwinkel α1 von 0° versehen sind. Im Ausführungsbeispiel ist der Flankenwinkel α2 der gegenüberliegenden Gewindeflanke 32b ebenfalls 0°.

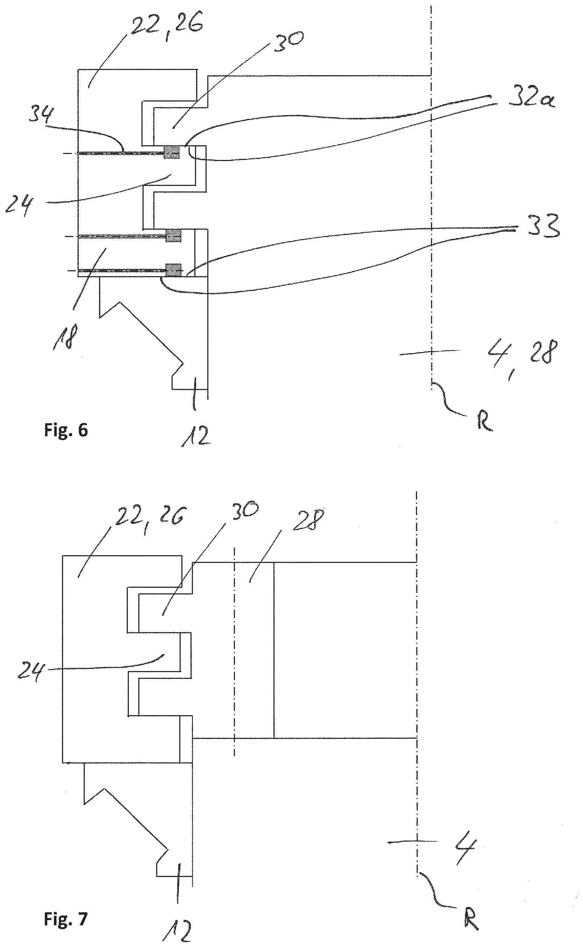

Die Fig. 6 bis 9 zeigen jeweils ausschnittsweise (Halb-)Schnittdarstellungen, in denen jeweils lediglich der Innenring 12, die Lagerwelle 4 sowie die Lagerspannvorrichtung mit dem Innenteil 28 und dem Außenteil 26 dargestellt sind.

Fig. 6 zeigt dabei eine Ausführungsvariante, bei der zur Verminderung der Reibung einerseits zwischen den lastübertragenden Gewindeflanken 32a des Innenteils 28 und des Außenteils 26 und andererseits auch zur Verringerung der Reibung zwischen aneinander anliegenden Anlageflächen 33 zwischen dem Innenring 12 und dem Außenteil 26 ein Schmierstoff, insbesondere Öl, eingebracht wird. Hierzu ist ein Schmierstoffversorgungssystem ausgebildet, welches insbesondere Zuführkanäle 34 aufweist, die zu Austrittsstellen münden, um den Schmierstoff, insbesondere Öl, an den Gewindeflanken 32a bzw. den Anlageflächen 33 austreten zu lassen. Speziell wird hierbei der Schmierstoff unter Druck zugeführt, das Schmierstoffversorgungssystem weist eine entsprechende Druckpumpe auf.

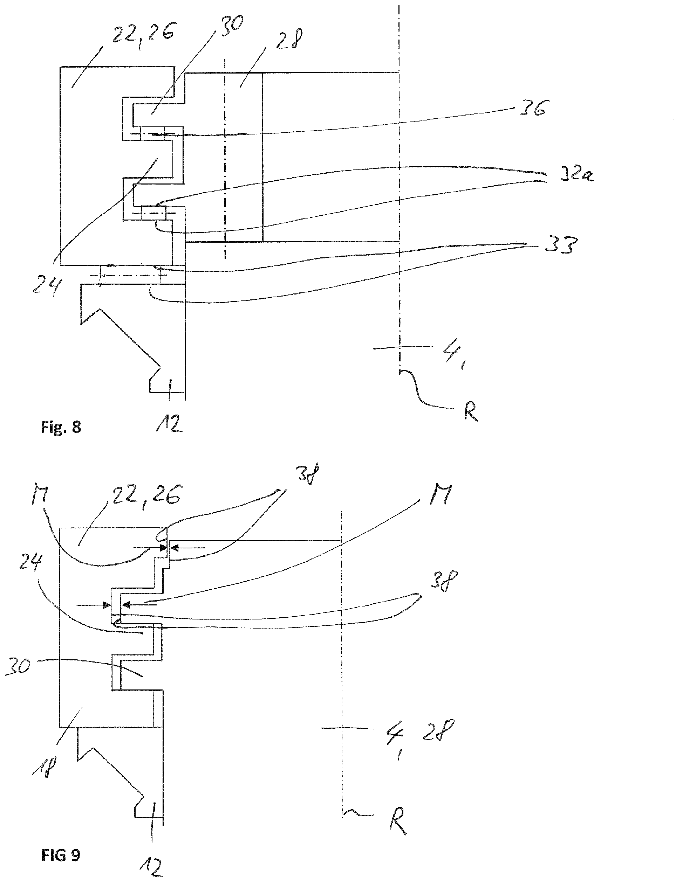

Bei den in den Fig. 5 und 6 dargestellten Ausführungsvarianten (ebenso wie bei der Ausführungsvariante gemäß der Fig. 9) ist die Lagervorspannvorrichtung unmittelbar in die Großlagereinheit 2 dauerhaft integriert.

Anhand den Fig. 7 und 8 wird nunmehr eine Lagervorspannvorrichtung erläutert, welche lediglich temporär als Hilfseinrichtung bei der Montage der Großlagereinheit 2 eingesetzt wird. Die Lagervorspannvorrichtung weist allgemein das Außenteil 26 und das Innenteil 28 auf. Wird die Lagervorspannvorrichtung als Hilfseinrichtung eingesetzt, so werden diese beiden Bauteile 26,28 lediglich bei der Montage eingesetzt und ansonsten wieder entfernt. Bei einem dauerhaften Bestandteil der Großlagereinheit 8 bleiben sie demgegenüber während des Betriebs der Großlagereinheit 2 fester Bestandteil der Großlagereinheit 2. Speziell dient dann die Lagervorspanneinrichtung auch zur Aufrechterhaltung der Vorspannung, das heißt dass auf den zu verstellenden Lagerring 12 einwirkende Innenteil 28 bzw. Außenteil 26 (Spannring 22) definiert dann ein dauerhaftes Vorspannelement. In diesem Fall ist daher kein weiteres Vorspannelement, wie beispielsweise Klemmring oder Sprengring erforderlich, wie dies zu den Fig. 1,2 erläutert wurde.

Bei der Verwendung als Hilfseinrichtung (Vorspanntool) werden beide Teile, also sowohl Außenteil 28 als auch Innenteil 28 lediglich temporär am Großlagereinheit 2 befestigt. Bei einer Großlagereinheit 2 mit O-Anordnung wird hierbei also das Innenteil 28 temporär insbesondere an der Lagerwelle 4 beispielsweise mithilfe von Schrauben befestigt. Das Innenteil 28 ist hierbei gemäß den Fig.7 und 8 als ein (Ring-)Element mit dem Außengewinde 30 ausgebildet, welches gegen eine Stirnfläche der Lagerwelle 4 temporär verspannt ist und damit an der Lagerwelle 4 befestigt ist. Auf dieses Innenteil 28 wird dann der Spannring 22 als Außenteil 26 nach Art einer Wellenmutter aufgeschraubt.

Speziell bei dieser Ausführungsvariante, bei der die Lagervorspannvorrichtung lediglich als temporäre Hilfseinrichtung verwendet wird, werden beispielsweise Rollkörper 36, beispielsweise Walzen oder Kugeln, als reibungsmindernde Elemente eingesetzt, wie dies in der Fig. 8 dargestellt ist. Alternativ oder ergänzend können auch an den entsprechenden reibbelasteten Flächen reibungsmindernde Beschichtungen (nicht näher dargestellt) vorgesehen sein.

Die als Hilfseinrichtung ausgebildete Vorspannvorrichtung dient weiterhin zur Bestimmung des Abstandmaßes X (vgl. hierzu Fig. 1, 2). Hierzu ist eine hier nicht näher dargestellte Messeinrichtung zur Erfassung des Abstandsmaßes X vorgesehen, die insbesondere automatisch das Abstandsmaß X erfasst und ausgibt, sobald die gewünschte Vorspannung durch eine axiale Verstellung des Lagerrings 12,14 erreicht ist. Basierend auf dem so ermittelten Abstandsmaß X erfolgt dann eine Anpassung des Vorspannelements 18 (Sprengring, Klemmring etc.), um dauerhaft die gewünschte Vorspannung während des Betriebs aufrecht zu erhalten.

Fig. 9 zeigt eine bevorzugte Weiterbildung, bei der Maßnahmen für eine radiale Zentrierung des Außenteils 26 bezüglich des Innenteils 28 vorgesehen sind. Hierzu sind insbesondere radiale Passflächen 38 ausgebildet, die zueinander ein definiertes Spaltmaß M aufweisen. In der Fig.9 sind dabei zwei alternative Passflächen-Paarungen angedeutet. Zum einen können die Passflächen 38 als zusätzliche, definierte Flächen zwischen Außenteil 26 und Innenteil 28 ausgebildet sein. Alternativ sind sie durch ein definiertes Abstandmaß M zwischen einem Gewindegrund und einer Stirnfläche eines Gewindegangs ausgebildet.

Eine derartige radiale Zentrierung ist insbesondere von Vorteil, falls das Vorspannelement 18 (also im Ausführungsbeispiel das Außenteil 26, Spannring 22, Wellenmutter) zusätzliche Funktionen übernimmt. Beispielsweise dient dieses Vorspannelement 18 zugleich auch als eine Anlauffläche für eine Dichtung oder in das Vorspannelement 18 ist eine Labyrinthdichtung integriert.

Allgemein wird durch die radiale Zentrierung ein radialer Rundlauffehler gering gehalten.

### Bezugszeichenliste

- 2: Großlagereinheit
- 4: Lagerwelle
- 6: Lagergehäuse
- 8: Lager
- 10: Axialrichtung
- 12: Innenring
- 14: Außenring
- 16: Wälzkörper
- 18: Vorspannelement
- 20: Gegenlagerfläche
- 22: Spannring/Wellenmutter
- 24: Innengewinde
- 26: Außenteil
- 28: Innenteil
- 30: Außengewinde
- 32a,b: Gewindeflanke
- 33: Anlagefläche
- 34: Zuführkanal
- 36: Rollkörper
- 38: radiale Passfläche

- α1,α2: Flankenwinkel
- B: Breite
- d: Durchmesser
- M: Spaltmaß
- R: Rotationsachse
- S: Gewindespiel
- X: Abstandsmaß

## Patentansprüche

1. Lagervorspannvorrichtung zum Vorspannen einer angestellten Großlagereinheit (2), die ein Innenteil (28) mit Außengewinde (30) und ein Außenteil (26) mit Innengewinde (24) aufweist und das Außenteil (26) oder das Innenteil (28) zum Verspannen gegen einen Lagerring (12) eines Lagers (8) der Großlagereinheit (2) ausgebildet sind, wobei das Außengewinde (30) und das Innengewinde (24) ineinander greifen und jeweils eine lastübertragende Gewindeflanke (32a) sowie eine gegenüberliegende Gewindeflanke (32b) aufweisen, wobei eine jeweilige Gewindeflanke (32a,b) einen Flankenwinkel (α1,α2) aufweist, **dadurch gekennzeichnet, dass** der Flankenwinkel (α1) der lastübertragenden Gewindeflanke maximal 10°, vorzugsweise maximal 5° und insbesondere 0° beträgt.

2. Lagervorspannvorrichtung nach einem der vorhergehenden Ansprüche, bei der das Außenteil (26) oder das Innenteil (28) als ein Spannring (22) ausgebildet ist.

3. Lagervorspannvorrichtung nach dem vorhergehenden Anspruch, bei der der Spannring (22) als das Außenteil (28) in Form einer auf eine Lagerwelle (4) aufschraubbaren Wellenmutter mit Innengewinde (24) ausgebildet ist oder als das Innenteil (28) in Form eines in ein Lagergehäuse (6) einschraubbaren Spannrings (22) mit einem Außengewinde (30) ausgebildet ist.

4. Lagervorspannvorrichtung nach einem der vorhergehenden Ansprüche, wobei das Lager (8) einen Innenring (12) aufweist, der eine Breite (B) und einen Durchmesser (d) aufweist und das Verhältnis von B/d kleiner 0,3 und vorzugsweise kleiner 0,1 ist.

5. Lagervorspannvorrichtung nach einem der vorhergehenden Ansprüche, bei der zwischen den Gewindegängen von Innenteil (28) und Außenteil (26) und/oder zwischen dem Innenteil (28) bzw. Außenteil (26) und einem Lagerring (12), gegen den das Innenteil (28) bzw. das Außenteil (26) verspannt ist, ein reibungsminderndes Element (36) eingebracht ist.

6. Lagervorspannvorrichtung nach dem vorhergehenden Anspruch, bei dem das reibungsmindernde Element ausgewählt ist aus
- einem Schmierstoff wie Öl,
- einer reibungsmindernden Beschichtung
- Rollkörpern (36) wie Kugeln, Walzen oder Rollen.

7. Lagervorspannvorrichtung nach dem vorhergehenden Anspruch, bei der eine Zuführung für den Schmierstoff vorgesehen ist, die Zuführkanäle (34) aufweist, welche im Innenteil und/oder im Außenteil (26) ausgebildet sind.

8. Lagervorspannvorrichtung nach einem der vorhergehenden Ansprüche, welche als eine Hilfseinrichtung bei der Montage der Großlagereinheit (2) ausgebildet ist, die zur Ermittlung eines Abstandsmaßes (X) zwischen einem Referenzpunkt (20) und dem Lagerring (12) im vorgespannten Zustand ausgebildet ist.

9. Lagervorspannvorrichtung nach dem vorhergehenden Anspruch, bei der das Abstandsmaß (X) als Funktion eines Verdrehwinkels, insbesondere mithilfe einer automatischen Drehwinkelerfassung, zwischen dem Innenteil (28) und dem Außenteil (26) bestimmt wird.

10. Lagervorspannvorrichtung nach einem der vorhergehenden Ansprüche, welche als eine Hilfseinrichtung bei der Montage der Großlagereinheit (2) ausgebildet ist und lediglich temporär während der Montage der Großlagereinheit (2) gegen den Lagerring (12) verspannt ist.

11. Lagervorspannvorrichtung nach einem der beiden vorhergehenden Ansprüche, bei der die Hilfseinrichtung das nicht auf den Lagerring (12) einwirkende Innenteil (28) oder das nicht auf den Lagerring (12) einwirkende Außenteil (26), welches lösbar an der Großlagereinheit (2) befestigbar ist, wobei insbesondere das Innenteil (28) an einer Lagerwelle (4) oder das Außenteil (28) an einem Lagergehäuse (6) lösbar befestigbar ist.

12. Lagervorspannvorrichtung nach einem der vorhergehenden Ansprüche, bei der zusätzlich ein Antrieb zum gegenseitigen Verdrehen des Außenteils (26) und des Innenteils (28) angeordnet ist, wobei vorzugsweise
- zumindest ein und vorzugsweise mehrere insbesondere hydraulische Verstellelemente angeordnet sind oder
- das Innenteil (28) oder das Außenteil (26) über einen insbesondere umfangsseitig umlaufenden Zahnring mithilfe zumindest eines und vorzugsweise mehrerer um den Umfang verteilt angeordneter Antriebsritzel angetrieben wird.

13. Lagervorspannvorrichtung nach einem der vorhergehenden Ansprüche, bei der eine Gewindestirnseite des Innengewindes (24) und/oder des Außengewindes (30) abgerundet oder mit einer Fase versehen ist.

14. Lagervorspannvorrichtung nach einem der vorhergehenden Ansprüche, bei der das Innenteil (28) und das Außenteil (26) für eine radiale Zentrierung zueinander ausgebildet sind und hierzu jeweils einander gegenüberliegende radiale Passflächen (38) aufweisen, zwischen denen ein vorgegebenes maximales Spaltmaß (M) besteht.

15. Angestellte Großlagereinheit (2), insbesondere Hauptlager einer Windkraftanlage mit einer Lagervorspannvorrichtung nach einem der vorhergehenden Ansprüche.

## Claims

1. Bearing pretensioning device for pretensioning an adjusted large bearing unit (2), which comprises an inner part (28) with external thread (30) and an outer part (26) with internal thread (24) and the outer part (26) or the inner part (28) is designed for tensioning against a bearing ring (12) of a bearing (8) of the large bearing unit (2), wherein the external thread (30) and the internal thread (24) engage in one another and each comprise a load-transmitting thread flank (32a) and an opposite thread flank (32b), wherein a respective thread flank (32a,b) comprises a flank angle (α1,α2), **characterized in that** the flank angle (α1) of the load-transmitting thread flank is at most 10°, preferably at most 5° and in particular 0°.

2. Bearing pretensioning device according to one of the preceding claims, in which the outer part (26) or the inner part (28) is designed as a tensioning ring (22).

3. Bearing pretensioning device according to the preceding claim, in which the tensioning ring (22) is designed as the outer part (28) in the form of a shaft nut with an internal thread (24), that can be screwed onto a bearing shaft (4), or as the inner part (28) in the form of a tensioning ring (22) with an external thread (30), that can be screwed into a bearing housing (6).

4. Bearing pretensioning device according to one of the preceding claims, wherein the bearing (8) comprises an inner ring (12), which comprises a width (B) and a diameter (d) and the ratio B/d is less than 0.3 and preferably less than 0.1.

5. Bearing pretensioning device according to one of the preceding claims, in which a friction-reducing element (36) is inserted between the threads of the inner part (28) and outer part (26) and/or between the inner part (28), respectively the outer part (26), and a bearing ring (12), against which the inner part (28), respectively the outer part (26), is tensioned.

6. Bearing pretensioning device according to the preceding claim, wherein the friction reducing element is selected from
- a lubricant such as oil,
- a friction-reducing coating,
- rolling elements (36) such as balls, cylinders or rollers.

7. Bearing pretensioning device according to the preceding claim, in which a feed for the lubricant is provided, which comprises feed channels (34) formed in the inner part and/or in the outer part (26).

8. Bearing pretensioning device according to one of the preceding claims, which is designed as an auxiliary device during the assembly of the large bearing unit (2), which is designed to determine a distance dimension (X) between a reference point (20) and the bearing ring (12) in the pretensioned state.

9. Bearing pretensioning device according to the preceding claim, in which the distance dimension (X) is determined as a function of a twist angle, in particular by means of an automatic twist angle detection device, between the inner part (28) and the outer part (26).

10. Bearing pretensioning device according to one of the preceding claims, which is designed as an auxiliary device during the assembly of the large bearing unit (2) and is only temporarily tensioned against the bearing ring (12) during the assembly of the large bearing unit (2).

11. Bearing pretensioning device according to one of the two preceding claims, in which the auxiliary device is the inner part (28) not acting on the bearing ring (12) or the outer part (26) not acting on the bearing ring (12), which can be detachably fastened to the large bearing unit (2), wherein in particular the inner part (28) can be detachably fastened to a bearing shaft (4) or the outer part (28) can be detachably fastened to a bearing housing (6).

12. Bearing pretensioning device according to one of the preceding claims, in which additionally a drive for mutual twisting of the outer part (26) and the inner part (28) is arranged, wherein preferably
- at least one and preferably several, in particular hydraulic, adjustment elements are arranged or
- the inner part (28) or the outer part (26) is driven via a toothed ring, in particular a circumferentially rotating toothed ring, by means of at least one and preferably several drive pinions arranged distributed around the circumference.

13. Bearing pretensioning device according to one of the preceding claims, in which one thread end face of the internal thread (24) and/or the outer thread (30) is rounded off or provided with a chamfer.

14. Bearing pretensioning device according to one of the preceding claims, in which the inner part (28) and the outer part (26) are designed for radial centering relative to one another and for this purpose respectively comprise radial fitting surfaces (38) opposite of one another, between which there is a predetermined maximum gap dimension (M).

15. Adjusted large bearing unit (2), in particular main bearing of a wind power plant with a bearing pretensioning device according to one of the preceding claims.

## Revendications

1. Dispositif de précontrainte de palier pour la précontrainte d'une grande unité de palier ajustée (2), qui comprend une partie intérieure (28) avec un filetage extérieur (30) et une partie extérieure (26) avec un filetage intérieur (24), et la partie extérieure (26) ou la partie intérieure (28) est conçue pour être contrainte contre une bague de palier (12) d'un palier (8) de la grande unité de palier (2), dans lequel le filetage extérieur (30) et le filetage intérieur (24) s'engagent l'un dans l'autre et comprennent respectivement un flanc de filetage (32a) transmettant la charge et un flanc de filetage opposé (32b), dans lequel un flanc de filetage respectif (32a,b) comprend un angle de flanc (α1,α2) et l'angle de flanc (α1) du flanc de filetage transmettant la charge est au maximum de 10°, de préférence au maximum de 5° et en particulier de 0°.

2. Dispositif de précontrainte de palier selon l'une des revendications précédentes, dans lequel la partie extérieure (26) ou la partie intérieure (28) est conçue comme une bague de serrage (22).

3. Dispositif de précontrainte de palier selon la revendication précédente, dans lequel la bague de serrage (22) est conçue comme la partie extérieure (28) sous la forme d'un écrou d'arbre avec un filetage intérieur (24), qui peut être vissé sur un arbre de palier (4), ou comme la partie intérieure (28) sous la forme d'une bague de serrage (22) avec un filetage extérieur (30), qui peut être vissé dans un logement de palier (6).

4. Dispositif de précontrainte de palier selon l'une des revendications précédentes, dans lequel le palier (8) comprend une bague intérieure (12), qui comprend une largeur (B) et un diamètre (d) et le rapport B/d est inférieur à 0,3 et de préférence inférieur à 0,1.

5. Dispositif de précontrainte de palier selon l'une des revendications précédentes, dans lequel un élément réducteur de frottement (36) est inséré entre les filetages de la partie intérieure (28) et de la partie extérieure (26) et/ou entre la partie intérieure (28), respectivement la partie extérieure (26), et une bague de palier (12), contre laquelle la partie intérieure (28), respectivement la partie extérieure (26) est contraint.

6. Dispositif de précontrainte de palier selon la revendication précédente, dans lequel l'élément de réduction du frottement est choisi parmi
- un lubrifiant comme l'huile,
- un revêtement réduisant le frottement,
- les éléments roulants (36) tels que des billes, des cylindres ou des rouleaux.

7. Dispositif de précontrainte de palier selon la revendication précédente, dans lequel une alimentation pour le lubrifiant est prévue, ladite alimentation comprenant des canaux d'alimentation (34), qui sont formés dans la partie intérieure et/ou dans la partie extérieure (26).

8. Dispositif de précontrainte de palier selon l'une des revendications précédentes, qui est conçu comme un dispositif auxiliaire lors du montage de la grande unité de palier (2), ledit dispositif auxiliaire étant conçu pour déterminer une dimension de distance (X) entre un point de référence (20) et la bague de palier (12) à l'état précontraint.

9. Dispositif de précontrainte de palier selon la revendication précédente, dans lequel la dimension de distance (X) est déterminée en fonction d'un angle de torsion, en particulier à l'aide d'une détection automatique de l'angle de torsion, entre la partie intérieure (28) et la partie extérieure (26).

10. Dispositif de précontrainte de palier selon l'une des revendications précédentes, qui est conçu comme un dispositif auxiliaire lors du montage de la grande unité de palier (2) et qui n'est contraint contre la bague de palier (12) que temporairement lors du montage de la grande unité de palier (2).

11. Dispositif de précontrainte de palier selon l'une des deux revendications précédentes, dans lequel le dispositif auxiliaire est la partie intérieure (28) n'agissant pas sur la bague de palier (12) ou la partie extérieure (26) n'agissant pas sur la bague de palier (12), qui peut être fixée de manière amovible à la grande unité de palier (2), dans lequel en particulier la partie intérieure (28) peut être fixée de manière amovible à un arbre de palier (4) ou la partie extérieure (28) à un logement de palier (6).

12. Dispositif de précontrainte de palier selon l'une des revendications précédentes, dans lequel est disposé en outre un entraînement pour la torsion mutuelle de la partie extérieure (26) et de la partie intérieure (28), dans lequel de préférence
- au moins un et de préférence plusieurs éléments de réglage, notamment hydrauliques, sont disposés ou
- la partie intérieure (28) ou la partie extérieure (26) est entraînée par une bague dentée en particulier tournant sur la circonférence, à l'aide d'au moins un et de préférence de plusieurs pignons d'entraînement répartis sur la circonférence.

13. Dispositif de précontrainte de palier selon l'une des revendications précédentes, dans lequel une face d'extrémité du filetage intérieur (24) et/ou du filetage extérieur (30) est arrondie ou pourvue d'un chanfrein.

14. Dispositif de précontrainte de palier selon l'une des revendications précédentes, dans lequel la partie intérieure (28) et la partie extérieure (26) sont conçues pour un centrage radial l'une par rapport à l'autre et à cet effet comprennent respectivement des surfaces d'ajustement radiales (38) mutuellement opposées, entre lesquelles il existe une dimension d'écartement (M) maximale prédéterminée.

15. Grande unité de palier ajustée (2), en particulier palier principal d'une centrale éolienne avec un dispositif de précontrainte de palier selon l'une des revendications précédentes.
